# EUROPEAN PATENT SPECIFICATION

(11) **EP 1 224 651 B1**
(45) Date of publication and mention of the grant of the patent: **30.07.2003**
(21) Application number: 99954849.8
(22) Date of filing: 14.10.1999
(51) Int. Cl.: G09F 3/02, F16F 9/04

(54) **PART NUMBER IDENTIFICATION TAG**
TEILNUMMERIDENTIFIZIERUNGSETIKETT
ETIQUETTE D'IDENTIFICATION DE NUMERO DE PIECE

(43) Date of publication of application: 24.07.2002
(73) Proprietor: THE GOODYEAR TIRE & RUBBER COMPANY, Akron, Ohio 44316-0001 (US)
(72) Inventor: ARNOLD, John, Eric, North Canton, OH 44720 (US)
(74) Representative: Leitz, Paul
(86) International application number: US9923688
(87) International publication number: WO01027905

(56) References cited:
- WO-A-86/04175
- WO-A-92/11905
- WO-A-93/22213
- US-A- 2 613 462
- US-A- 4 169 326
- US-A- 5 555 655

## Description

### Technical Field

The present invention is directed to an identification tag. More specifically, a permanently attached identification tag for circular articles is disclosed.

### Background Art

It is a known and conventional practice to label articles of manufacture. Such labels range from simple paper labels with alphanumeric characters to bar code labels. The form of label or its content may be selected depending upon the type of inventory means or the end use of the article.

Exemplary tags for articles include, but are not limited to, those disclosed in US Patents 4,169,326 (a tag secured by a wire loop under a crimped end plate), 4,900,637 (a metal tag dropped in molten material that floats in the material and becomes a integral part of the formed article), 5,249,380 (a tri-fold tag holder for the neck of a gas cylinder), 5,555,655 (a ring tag with tabs for the neck of a gas cylinder), and 5,924,739 (a tear away paper tag for the neck of a bottle).

In the automotive industry, it is common to adhesively apply a paper tag to an automotive part. Such tags are useful for identifying the proper part size and type when the part must be replaced. The adhesive tags are placed at any location on the part where the label will adhere. However, since the undercarriage and the engine of an automobile is subject to extremes in temperature and weather conditions, these labels often become dirty, torn, and illegible. Thus it is desired to provide a more permanent identification tag for an automotive part.

US Patent 5,947,672 discloses one type of automotive part identification tag. The metallic tag is circular and fits over a lube oil plug. Since an identification tag is suitable for projecting auto parts, but is not suitable for auto parts which do not have a projection portion over which the disclosed tag may be placed and then easily viewed.

The present invention is directed to an identification tag that overcomes the limitations of the known prior art identification means. While the inventive identification tag is disclosed as being used with an airspring, the tag may be used with a variety of manufactured articles wherein a conventional paper tag is insufficient to provide life-long identification of the article.

### Summary of the Invention

The present invention is directed to an improved airspring, or similar manufactured article. The manufactured article is comprised of a flexible cylindrical sleeve having a first and second end. The sleeve is secured at one of the ends by a retainer. The article is provided with a tag made from a sheet material. The improvement in the manufactured article is that a portion of the tag is non-removably secured between the sleeve and the retainer.

In one aspect of the invention, the tag is formed from a flexible plastic or elastomeric material.

In another aspect of the invention, the portion of the tag that is secured between the sleeve and the retainer, prior to being secured between the sleeve and the retainer, has a molded configuration corresponding to the shaped configuration of the sleeve end.

In another aspect of the invention, prior to being secured between the sleeve and the retainer, the tag has a molded circumferential curvature corresponding to the outer curvature of the cylindrical sleeve.

### Brief Description of Drawings

The invention will be described by way of example and with reference to the accompanying drawings in which:
FIG. 1 illustrates an assembled and tagged air spring;
FIG. 2 illustrates the method of applying the tag to an airspring; and

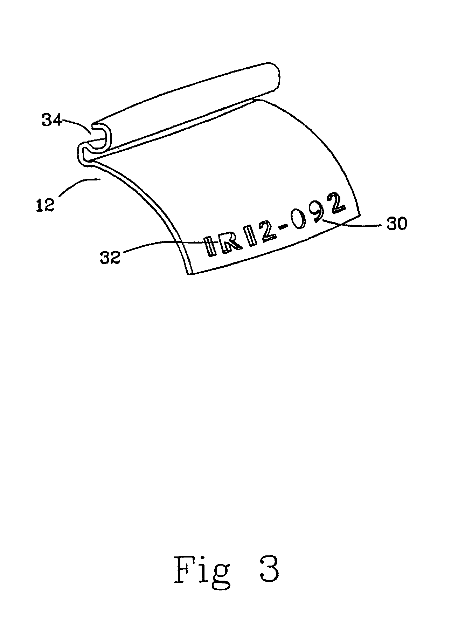

FIG. 3 illustrates a tag formed in accordance with the present invention.

### Detailed Description of the Invention

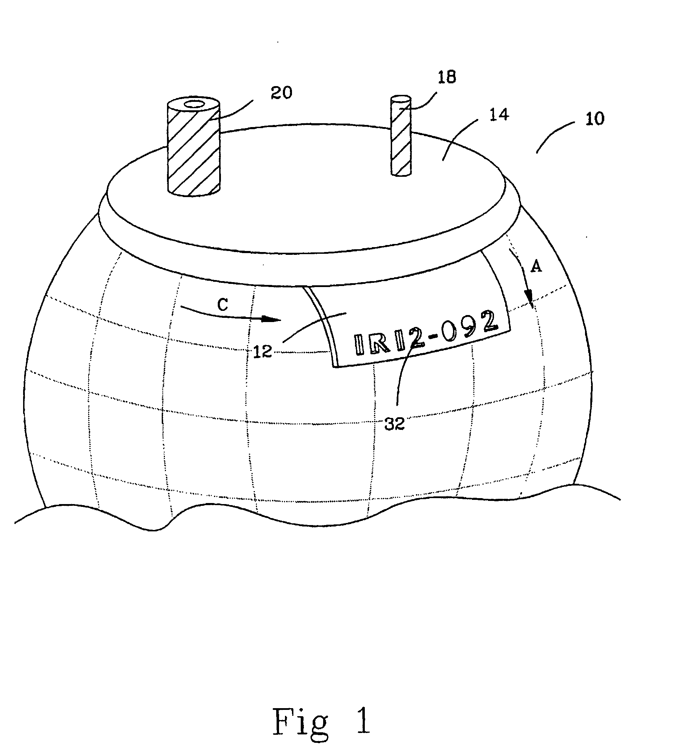

One end of a conventional airspring 10 is illustrated in FIG. 1. As noted above, the inventive identification tag 12 is disclosed as being used with an airspring 10, but may be used with a variety of manufactured articles in the manner disclosed below. The airspring 10 has a retainer 14 that secures a first end of the elastomeric sleeve 16. The retainer 14 is provided with at least one securing bolt 18 and an air passage 20 to permit the flow of gas into and out of the chamber created when the sleeve 16 is secured at the opposing end (not illustrated). The airspring sleeve 16 is a reinforced elastomeric tube and is constructed in a rolling lobe configuration or a bellows configuration; both sleeve constructions are known to those in the art. In a rolling lobe airspring, the opposing end of the sleeve 16 is typically secured by a retainer and piston; and in a bellows airspring, the opposing end of the sleeve 16 is secured by a crimped retainer. Secured by the retainer 14, and held against the sleeve 16, is the inventive identification tag 12.

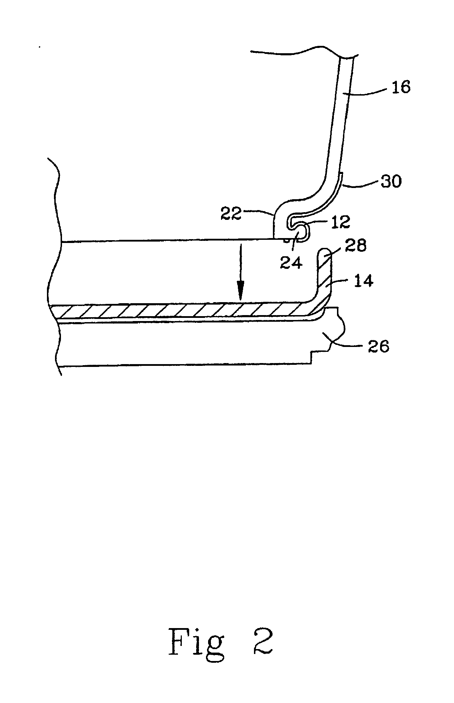

The end 22 of the sleeve 16 has an inextensible bead ring 24, see FIG 2. The bead ring 24 is at least one continuous winding of wire, preferably steel. The sleeve end 22 is shaped about the bead ring 24. When the airspring 10 is assembled, an uncrimped retainer 14 is placed inside a punch pot 26 and the sleeve end 22 is inserted into the retainer 14. Prior to inserting the sleeve end 22 into the retainer 14, the inventive identification tag 12 is secured to the sleeve end 22. The edges 28 of the retainer 14 are crimped about the bead ring 24 and sleeve end 22 to form an airtight seal between the retainer 14 and the sleeve end 22. Crimping of the retainer 14 about the sleeve end 22 also secures the tag 12 to the airspring 10.

As seen in cross-section, the tag 12 is a singular piece having an S-shaped configuration with an extending end. The curvature of the identification portion 30 of the tag 12, that is, the portion of the tag 12 which is provided with the identifying indicia 32, is selected to correspond to the axial curvature A of the sleeve 14 (see FIG 1), preferably when the airspring is nominally inflated. Because of the variance in curvature of the sleeve 14 when the airspring 10 is operated, the length of the identification portion 30 of the tag 12 should not extend any substantial distance down the side of the sleeve 12. The crimping portion 34 of the tag 12 is configured to correspond to the configuration of the shaped sleeve end 22. The tag 12 is also defined by a radius of curvature in the circumferential direction C of the sleeve 14.

The tag 12 is formed from any suitable material that will provide a long life to the tag and survive the conditions to which the airspring 10 and the tag 12 will be subjected. The same materials used in the manufacture of the airspring 10 may be used to form the tag 12. The material used may be any durable thermoplastic, thermoset, or thermoelastic sheet material. Examples of suitable materials include, but are not limited to, reinforced nylon, reinforced thermoplastic, and elastomer reinforced by fiber loading or a reinforcement layer sufficient to provide shape to the tag 12 while maintaining flexibility.

The identifying indicia 32 on the tag 12 may be provided in one of many ways, or a combination of methods, depending upon the desired information to be conveyed. A first method of providing the indicia 32 is to punch-out the desired information. This method is preferred for information desired to be provided over the life of the airspring 10, and is also suitable for information that is common to a large number of automotive parts produced that are to be tagged. So that the indicia 32 are easier to read, the tag 12 color should contrast with the color of the sleeve 14. A second method of providing the indicia 32 is to stamp the indicia 32 onto the tag without completely penetrating the tag 12. The indentation marks may then be inked in to provide any desired contrast. Indentation of indicia 32 is also useful for information to be provided over the life of the manufactured article. The third method of providing the indicia 32 is to imprint the information onto tag 12 as accomplished conventionally with other identification methods. This method is best suited for providing information of the nature that changes. Any combination of these methods may also be used. Other known conventional methods of providing indicia are also suitable and within the scope of the invention, so long as the information is provided in a manner which will last the lifetime of the airspring 10 and tag 12.

The type of information provided by the indicia 32 is dependent upon the type of manufactured article. For the exemplary airspring 10, such information may include, but is not limited to, the airspring assembly number, manufacture codes, and plant codes. For ease of marking, all of the provided indicia 32 are provided on the tag 12 prior to placing the tag 12 onto the shaped sleeve end 22. The presentation of the indicia 32 may be alphanumeric, as illustrated, or bar code.

The inventive tag 12 allows for easier future replacement of the airspring by retaining the assembly part number or other necessary information. The tag 12 is more durable than conventional adhesive paper labels applied to the retainer 14. The tag 12 is also easier to apply and less costly than ink transfer to the air sleeve of the airspring, especially for bellows airspring sleeves, which, due to the configuration of the airsleeve, are not easily ink labeled by conventional ink transfer methods.

## Claims

1. An airspring (10) comprising a flexible cylindrical sleeve (16) having a first and second end, a retainer (14) secured to one of the ends (22) of the sleeve (16), and a tag (12) made from a sheet material, **characterized by** a portion of the tag (12) being non-removably secured between the sleeve (16) and the retainer (14).

2. The airspring (10) in accordance with claim 1 wherein the tag (12) is of a flexible plastic or elastomeric material.

3. The airspring (10) in accordance with claim 1 wherein the portion of the tag (12) that is secured between the sleeve (16) and the retainer (14), prior to being secured between the sleeve (16) and the retainer (14), has a shaped configuration corresponding to the shaped configuration of the sleeve end (22).

4. The airspring (10) in accordance with claim 1 wherein the tag (12), prior to being secured between the sleeve (16) and the retainer (14), has a molded circumferential curvature corresponding to the outer curvature of the cylindrical sleeve (16).

## Patentansprüche

1. Luftfeder (10), umfassend eine flexible zylindrische Hülse (16) mit einem ersten und einem zweiten Ende, einer Halterung (14), die an einem der Enden (22) der Hülse (16) befestigt ist, und einem Etikett (12), das aus einem Bogenmaterial besteht,
**dadurch gekennzeichnet, dass**
ein Abschnitt des Etiketts (12) nicht entfernbar zwischen der Hülse (16) und der Halterung (14) befestigt ist.

2. Luftfeder (10) nach Anspruch 1, wobei das Etikett (12) aus einem flexiblen Kunststoff- oder Elastomer-Material besteht.

3. Luftfeder (10) nach Anspruch 1, worin der Abschnitt des Etiketts (12), der zwischen der Hülse (16) und der Halterung (14) befestigt ist, bevor er zwischen der Hülse (16) und der Halterung (14) befestigt wird, eine geformte Gestalt besitzt, die der geformten Gestalt des Hülsenendes (22) entspricht.

4. Luftfeder (10) nach Anspruch 1, wobei das Etikett (12), bevor es zwischen der Hülse (16) und der Halterung (14) befestigt wird, eine in der Form hergestellte Umfangskrümmung besitzt, die der äußeren Krümmung der zylindrischen Hülse (16) entspricht.

## Revendications

1. Ressort pneumatique (10) comprenant un manchon cylindrique flexible (16) comportant une première et deuxième extrémités, un dispositif de retenue (14) fixé à une des extrémités (22) du manchon (16), et une étiquette (12) constituée d'une matière en feuilles, **caractérisé par le fait qu'**une portion de l'étiquette (12) est fixée de manière non amovible entre le manchon (16) et le dispositif de retenue (14).

2. Ressort pneumatique (10) selon la revendication 1, dans lequel l'étiquette (12) est constituée d'une matière plastique ou d'une matière élastomère flexible.

3. Ressort pneumatique (10) selon la revendication 1, dans lequel la portion de l'étiquette (12) qui est fixée entre le manchon (16) et le dispositif de retenue (14), avant sa fixation entre le manchon (16) et le dispositif de retenue (14), possède une configuration qui épouse la configuration façonnée de l'extrémité (22) du manchon.

4. Ressort pneumatique (10) selon la revendication 1, dans lequel l'étiquette (12), avant sa fixation entre le manchon (16) et le dispositif de retenue (14), présente une courbure circonférentielle moulée correspondant à la courbure externe du manchon cylindrique (16).
